# EUROPÄISCHE PATENTANMELDUNG

(11) **EP 1 112 799 A2**
(43) Veröffentlichungstag der Anmeldung: **04.07.2001**
(21) Anmeldenummer: 00126095.9
(22) Anmeldetag: 29.11.2000
(51) Int. Cl.: B23H 7/10

(54) **Vorrichtung und Verfahren zum Einführen einer Bearbeitungselektrode in einer Funkenerosionsmaschine**

(30) Priorität: 28.12.1999 DE 19963416
(71) Anmelder: AGIE SA, 6616 Losone (CH)
(72) Erfinder: Baiardi, Giorgio, 6600 Locarno (CH); Wehrli, Peter, 6612 Ascona (CH)
(74) Vertreter: Niederkofler, Oswald A. Dipl.-Phys.

(57) **Zusammenfassung**

Die Erfindung betrifft eine Vorrichtung zur Aufbereitung einer Bearbeitungselektrode, insbesondere einer Bearbeitungselektrode oder Stabsenkelektrode in einer Funkenerosionsmaschine, für die Zufuhr in ein Elektrodenlaufsystem (590,600,710), welche wenigstens ein Ansaug- und Vorschubmittel (20, 30,40,70) zum Ansaugen und Vorschieben der Bearbeitungselektrode (10,10') und wenigstens ein Druckausgleichsmittel (100,120; 160,170) aufweist. Die Erfindung betrifft außerdem eine Elektrodenwechselvorrichtung, welche wenigstens zwei erfindungsgemäße Vorrichtungen (V,V') aufweist und ein Verfahren zur Aufbereitung einer Bearbeitungselektrode (10,10').

## Beschreibung

Die Erfindung betrifft eine Vorrichtung und ein Verfahren zum Einführen einer Bearbeitungselektrode, insbesondere einer Draht- oder Stabsenkelektrode, in ein Elektrodenlaufsystem einer Funkenerosionsmaschine.

Funkenerosionsmaschinen dienen der Bearbeitung von Werkstücken mittels elektrischen Funkenentladung zwischen einem elektrisch leitenden Werkstück und einer Bearbeitungselektrode. Insbesondere kann das Werkstück mittels einer Drahtelektrode zugeschnitten oder mit einer Stabsenkelektrode durch Bohren oder Aushöhlen bearbeitet werden. Dabei wird neben Materialpartikeln des Werkstücks auch die Bearbeitungselektrode selbst abgetragen. Infolgedessen muß fortwährend neues Elektrodenmaterial zugeführt werden. Beispielsweise wird zu diesem Zweck eine Drahtelektrode von einer Spule abgerollt oder eine stabförmige Bearbeitungselektrode durch die Arbeitszone der Funkenerosionsmaschine hindurchgeführt.

Für die Zufuhr muß eine neue Bearbeitungselektrode zunächst aufbereitet und dabei insbesondere in eine für die Zufuhr geeignete Position gebracht werden (nachfolgend als "Einführen der Bearbeitungselektrode" bezeichnet). Entsprechende Aufbereitungs- bzw. Einführungsvorrichtungen werden in der EP 0 161 657 ("Vorrichtung zum Führen einer draht- oder bandförmigen Schneideelektrode an einer Werkzeugmaschine") und in der JP 185322/93 ("Elektrische Drahtfunkenerosionsmaschine") beschrieben. Im beiden Fällen erfolgt die Aufbereitung von Hand.

Es ist ein Ziel der Erfindung, eine verbesserte Vorrichtung und ein verbessertes Verfahren zur Aufbereitung einer Bearbeitungselektrode, insbesondere einer Drahtelektrode oder Stabsenkelektrode einer Funkenerosionsmaschine, für die Zufuhr in ein Elektrodenlaufsystem zur Verfügung zu stellen.

Das Ziel der Erfindung wird durch den Gegenstand des Vorrichtungsanspruchs 1 erreicht, also durch eine Vorrichtung zum Einführen einer Bearbeitungselektrode, insbesondere einer Drahtelektrode oder einer Stabsenkelektrode, in ein Elektrodenlaufsystem einer Funkenerosionsmaschine, mit: wenigstens einem Ansaug- und Vorschubmittel zum Ansaugen und Vorschieben der Bearbeitungselektrode; und wenigstens einem in Elektrodenvorschubrichtung vor dem Ansaug- und Vorschubmittel vorgesehenen Druckausgleichsmittel zum Abbau eines Fluiddruckes.

Das Ziel der Erfindung wird außerdem durch den Gegenstand des Vorrichtungsanspruchs 26 erreicht, also durch eine Elektrodenwechselvorrichtung, welche wenigstens zwei erfindungsgemäße Vorrichtungen zur Aufbereitung einer Bearbeitungselektrode umfaßt und zum wahlweisen Zuführen der jeweiligen Bearbeitungselektrode relativ zu einem Eingangselement des Elektrodenlaufsystems bewegbar ist.

Schließlich wird das Ziel der Erfindung durch den Gegenstand des Verfahrensanspruchs 27 erreicht, also durch ein Verfahren zum Einführen bzw. Aufbereiten einer Bearbeitungselektrode, insbesondere einer Drahtelektrode oder einer Stabsenkelektrode, in ein Elektrodenlaufsystem einer Funkenerosionsmaschine, bei welchem: ein Fluid zwischen eine als Außendüse ausgebildete Hauptdüse und eine Innendüse eingespritzt wird; hierdurch ein Unterdruck in einer Bohrung der Innendüse erzeugt und eine Bearbeitungselektrode angesaugt wird, und die angesaugte Bearbeitungselektrode vorgeschoben wird; und dabei der Fluiddruck in wenigstens einem der Hauptdüse vorgeschalteten Druckausgleichsmittel abgebaut wird.

Anders als bei bekannten Vorrichtungen und Verfahren für die Aufbereitung einer Bearbeitungselektrode kann erfindungsgemäß die Bearbeitungselektrode auch beim Einfädeln in die Aufbereitungseinrichtung angesaugt werden. Dies ist insbesondere für feine Erodierdrähte (Elektroden), welche von Hand ohne Hilfsmittel kaum manipulierbar sind, vorteilhaft. Hierdurch wird der Einsatzbereich von Funkenerosionsmaschinen für neuartige Anwendungen erweitert und vor allem der Arbeitsaufwand für einen Operator erheblich reduziert. Außerdem kann durch das Druckausgleichs- bzw. Druckentlastungsmittel der zum Ansaugen und Vorschieben der Bearbeitungselektrode aufgebaute Druck in der'Vorrichtung zum Eingang der Vorrichtung hin zumindest weitgehend abgebaut und damit vermieden werden, daß ungewollt z.B. ein druckerzeugendes Fluid am Eingang der Vorrichtung austritt.

Die Unteransprüche 2 bis 22 haben vorteilhafte Ausgestaltungen der erfindungsgemäßen Vorrichtung zum Gegenstand.

Insbesondere umfassen nach Anspruch 2 die Ansaug- und Vorschubmittel eine Hauptdüse, welche im wesentlichen längs einer Hauptachse ausgerichtet ist. Ein Fluid ist in die Hauptdüse einspritzbar. Durch Einspritzung des Fluids in die Hauptdüse auf deren Einspritzseite ist zunächst ein die Bearbeitungselektrode ansaugender Unterdruck erzeugbar und dann die angesaugte Bearbeitungselektrode vorschiebbar.

Auf diese Weise werden Ansaug- und Vorschubmittel besonders einfach implementiert. Zudem ist es möglich, die Bearbeitungselektrode mit dem für den Ansaugevorgang verwendeten Fluid weiter durch das Elektrodenlaufsystem der Funkenerosionsmaschine zu transportieren.

Nach Anspruch 3 ist die Hauptdüse als Außendüse mit einer Innendüse und einem zwischen Außen- und Innendüse verlaufenden sich verjüngenden Strömungsspalt. Das Fluid ist in einen Strömungsspalt zwischen der Innenwand Hauptdüse und der Außenwand der Innendüse einspritzbar. Die Bearbeitungselektrode ist durch die Bohrung der Innendüse zunächst ansaugbar und dann vorschiebbar.

So kann der zum Ansaugvorgang benötigte Unterdruck besonders einfach und wirkungsvoll erzeugt werden. Dies wird in Anspruch 4 weiter verbessert.

Nach Anspruch 5 ist im wesentlichen längs der Hauptachse vor dem von der Hauptdüse abgewandten Eingang der Bohrung als Druckausgleichsmittel wenigstens eine Entlastungskammer angeordnet. Aus dieser Entlastungskammer ist das zum Einhang der Vorrichtung hin strömende Fluid durch eine Ableitung abführbar, nachdem es seinen Überdruck in der Entlastungskammer abgebaut hat.

Entlastungskammern sind zum Druckausgleich besonders gut geeignet. Dabei wird das Fluid, soweit es in die Kammern entweicht, dort aufgestaut und verliert dort Strömungsenergie, insbesondere dann wenn die Kammer ebenfalls bevorzugt mit einem Fluid gefüllt ist. Über die Ableitung der Entlastungskammern wird entsprechend dem dort vorherrschenden Druck das Fluid aus der Vorrichtung entladen. Auf diese Weise wird vermieden, daß Fluid ungewollt und unkontrolliert z.B. am Eingang der erfindungsgemäßen Vorrichtung austritt.

In einer bevorzugten Ausführungsform umfaßt die Vorrichtung zwei oder mehrere Entlastungskammern (Anspruch 6). Grundsätzlich reicht es aus, nur eine Entlastungskammer zu verwenden. Um ungewollten Fluidaustritt mit vertretbarem Aufwand möglichst weitgehend zu vermeiden, ist es aber zweckmäßig, zwei oder mehrere hintereinander angeordnete Entlastungskammern zu verwenden, die einen kaskadenartigen Druckabbau bewirken.

Weiterhin ist bevorzugt Fluid aus den Entlastungskammern durch die Ableitungen im wesentlichen entgegen der Schwerkraft abführbar (Anspruch 7). Prinzipiell ist es möglich, das Fluid in jede beliebige Richtung abzuleiten. Indem dies bevorzugt entgegen der Schwerkraft geschieht, erreicht man jedoch, daß eine Ableitung nur stattfindet, wenn in der Kammer ein Überdruck entsteht: Während des Vorschiebens der Bearbeitungselektrode im Elektrodenlaufsystem der Funkenerosionsmaschine wird aufgrund des im System herrschenden Gegendrucks beispielsweise Fluid in die Entlastungskammer eindringen. Da dies unter einem gewissen Druck bzw. Gegendruck geschieht, wird ein Teil des Fluids in einem Strahl längs der Bearbeitungselektrode die Entlastungskammer durchqueren. Ein anderer Teil verbleibt aber in der Entlastungskammer, so daß diese mit Fluid aufgefüllt wird. Sobald die Entlastungskammer mit Fluid gefüllt ist, wird das Fluid längs der Bearbeitungselektrode durch das übrige ruhende Fluid abgebremst, abgelenkt und ggf. verwirbelt, so daß der Fluiddruck in bzw. hinter der Entlastungskammer deutlich reduziert ist. Infolgedessen wird der Fluiddruck in der Entlastungskammer zu einem Überdruck anwachsen und Fluid aus der Ableitung entgegen der Schwerkraft hinausbefördert.

Grundsätzlich könnte man dies auch mit einer Ableitung mit der Schwerkraft erreichen, wenn diese zum Beispiel einen hinreichend engen Durchmesser aufweisen würde. Einfacher und wirkungsvoller erreicht man dieses Ziel jedoch in der oben beschriebenen Weise.

Aus den Ansprüchen 8-13 ergeben sich weitere vorteilhafte Ausgestaltungen der Erfindung, welche Haltemittel für das Halten der aufbereiteten Bearbeitungselektrode betreffen.

Nach Anspruch 14 sind im wesentlichen längs der Hauptachse hinter der ersten Düse Trennmittel zum Schneiden der Bearbeitungselektrode angeordnet.

Die Trennmittel ermöglichen es, z.B. eine drahtförmige Bearbeitungselektrode nach ihrer Aufbereitung in der erfindungsgemäßen Vorrichtung zu schneiden. Da die Bearbeitungselektrode im allgemeinen von einer endlichen Rolle zugeführt wird, wird die Schneidevorrichtung außerdem benötigt, um die Bearbeitungselektrode am Ende des Abwikkelvorgangs von einem auf der Rolle oder jedenfalls außerhalb des Elektrodenlaufsystems verbleibenden Teilstück ohne Eingreifen eines Operators trennen zu können.

Die Ansprüche 15 bis 19 betreffen vorteilhafte Ausgestaltungen der Trennmittel und ihrer Umgebung; die Ansprüche 20-25 eine grundsätzliche Trennbarkeit und eine vorteilhafte Verbindung der erfindungsgemäßen Vorrichtung mit einem Elektrodenlaufsystem.

Weitere Merkmale und Vorteile der Erfindung werden nachstehend anhand von Ausführungsbeispielen und der beigefügten schematischen Zeichnung noch näher erläutert. In der Zeichnung sind:
- Fig. 1: ein Längsschnitt durch ein Ausführungsbeispiel der erfindungsgemäßen Vorrichtung; und
- Fig. 2: ein Längsschnitt durch eine schematische Darstellung einer Funkenerosionsmaschine, in welcher die erfindungsgemäße Vorrichtung aus Fig. 1 zweifach implementiert ist.

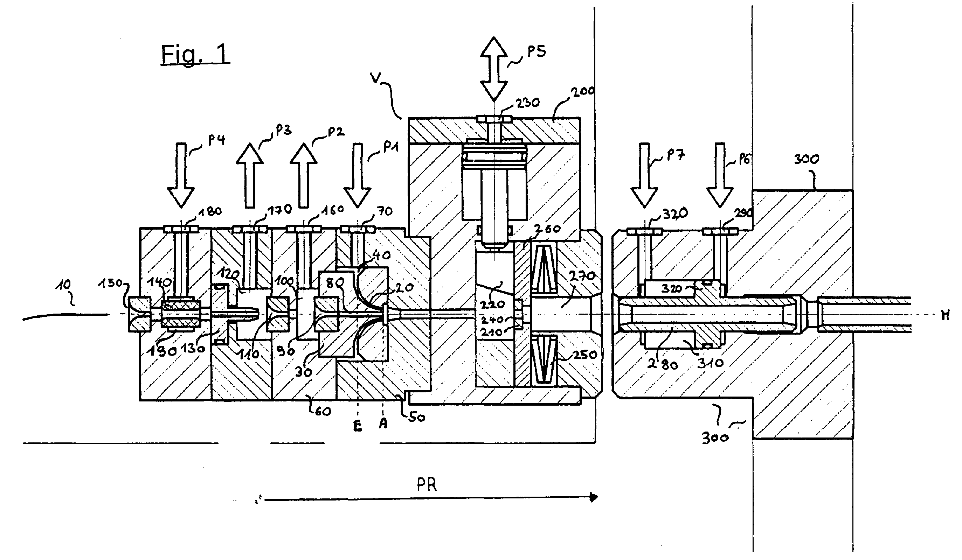

Fig. 1 zeigt, wie gesagt, einen Längsschnitt durch ein Ausführungsbeispiel einer erfindungsgemäßen Einfuhr- bzw. Aufbereitungsvorrichtung V, in welche eine Bearbeitungselektrode 10 (z.B. eine Drahtelektrode oder eine für eine Mikrosenkerosionsanlage verwendete Stabmikroelektrode mit zylindrischem Querschnitt oder mit einem besonderen Mikroprofil) eingeführt werden kann. Im Mittelbereich der Vorrichtung V befindet sich eine Düse 20 (im folgenden die Hauptdüse 20) mit einem jeweils durch eine gestrichelte Linie angedeuteten Eingangsbereich E und einem Ausgangsbereich A. Die Hauptdüse 20 ist längs einer Hauptachse H der Elektrodenaufbereitungsvorrichtung V angeordnet, welche in Fig. 1 ebenfalls als gestrichelte Linie eingezeichnet ist.

Die Hauptachse H dient im folgenden als Orientierungshilfe, um die Lage einzelner Komponenten der erfindungsgemäßen Vorrichtung V relativ zueinander zu beschreiben. Zusätzlich wird eine Richtung längs der Hauptachse H vom Ausgang A der Düse 20 zum Eingang E hin definiert (angedeutet durch Richtungspfeil PR). Diese Richtung weist in Laufrichtung der Bearbeitungselektrode.

Die Hauptdüse ist als Außendüse 20 in der Form eines zur Hauptachse H konzentrischen Ringes ausgebildet, dessen Öffnung sich längs der Hauptachse H vom Eingang E zum Ausgang A hin verjüngt. Die Verjüngung erfolgt derart, daß die Ringwand im Innenbereich des Ringes einen konvexen Querschnitt aufweist.

Vor der Außendüse 20 ist eine komplementäre Innendüse 30 angeordnet, welche in das Innere der Außendüse 20 hineinreicht. Die Innendüse 30 ist ebenfalls als zur Hauptachse H konzentrischer Ring ausgebildet. Die Bohrung 80 hat im hinteren Innenbereich einen konstanten Querschnitt. Die Außenwand des Ringes verjüngt sich in diesem Bereich hingegen zur ersten Düse 20 hin. Die Verjüngung erfolgt derart, daß die Ringwand im Außenbereich des Ringes einen konkaven Querschnitt aufweist. Infolgedessen kann die Innendüse 30 in die Außendüse 20 hineingeschoben werden.

Im Ausführungsbeispiel ist die Innendüse 30 in die Außendüse 20 nur soweit hineingeschoben, daß zwischen der konkaven Außenwand des Gegenstücks 30 und der konvexen Innenwand der Außendüse 20 noch ein zur Hauptachse H konzentrischer Strömungsspalt 40 verbleibt. Der Strömungsspalt 40 wird im Eingangsbereich E der Außendüse 20 zusätzlich durch ein erstes Gehäuse 50 und ein zweites Gehäuse 60 begrenzt, so daß er in diesem Bereich nach außen abgeschlossen ist. Im Ausgangsbereich A der Außendüse 20 ist der Strömungsspalt 40 hingegen nach außen offen.

In den Strömungsspalt 40 kann über eine erste Zuleitung 70 im Eingangsbereich E der Außendüse 20 ein Fluid (beispielsweise Wasser) zugeführt werden. Dieses verteilt sich über den zur Hauptachse H konzentrischen Strömungsspalt 40 und strömt - da der Strömungsspalt 40 im Eingangsbereich E der Außendüse 20 nach außen hin abgeschlossen ist - durch den Ausgang A der Außendüse 20 nach außen. Infolgedessen entsteht in der Bohrung 80 des Gegenstücks 30 ein Unterdruck, welcher sich vor die Innendüse 30 durch eine entsprechende Saugwirkung bemerkbar macht.

Der vordere Ausgang des Gegenstücks 30 ist als erste Saugdüse 90 ausgebildet. Davor befinden sich eine erste Entlastungskammer 100 (deren Funktion noch weiter unten erläutert wird), eine zweite Saugdüse 110, eine zweite Entlastungskammer 120, eine Elektrodenführung 130, eine Klemmvorrichtung 140 und eine dritte Saugdüse 150.

Die bisher beschriebenen Komponenten der erfindungsgemäßen Vorrichtung V können zum Ansaugen, Vorschieben und Halten der Bearbeitungselektrode 10 verwendet werden.

Zum Ansaugen der Bearbeitungselektrode 10 wird die Klemmvorrichtung 140 (wie dargestellt) in einen geöffneten Zustand versetzt. Dann (oder schon vorher) wird durch die erste Zuleitung 70 ein Fluid wie etwa Wasser in den Strömungsspalt 40 zugeführt. Dies ist durch einen ersten Pfeil P1 angedeutet.

Das Fluid strömt zum Ausgang A der Hauptdüse und verursacht dadurch einen Unterdruck in der Bohrung 80 und infolgedessen auch in der ersten Entlastungskammer 100 und in der zweiten Entlastungskammer 120 (dabei sind die weiter unten beschriebenen Ableitungen 160 und 170 der Entlastungskammern geschlossen). Aus diesem Unterdruck resultiert eine Ansaugwirkung vor der vierten Düse 150. Wird nun die Bearbeitungselektrode 10 in die Nähe der vierten Düse 150 gebracht, so wird er durch die dritte Saugdüse 150, die Klemmvorrichtung 140, die Elektrodenführung 130, die zweite Entlastungskammer 120, die zweite Saugdüse 110, die erste Entlastungskammer 100, die erste Saugdüse 90 und die Bohrung 80 gesaugt.

Sobald die Bearbeitungselektrode 10 in den Ausgangsbereich A der Hauptdüse und damit in Kontakt mit dem Fluid gelangt, tritt an die Stelle der Saugwirkung eine Schiebewirkung. Diese Schiebewirkung entsteht durch Reibungskräfte zwischen strömenden Fluid und der Bearbeitungselektrode.Dabei wird die Bearbeitungselektrode 10 mit dem Fluid hinter dem Ausgang der Hauptdüse mitbewegt.

In diesem Systemzustand wird das Fluid überwiegend in Ausgangsrichtung der Hauptdüse abgeleitet. Ein Teil des Fluids wird jedoch längs der Bearbeitungselektrode 10 durch die Bohrung 80 in die erste und auch in die zweite Entlastungskammer 100 bzw. 120 geleitet. Hieraus resultiert ein Druckaufbau in den Entlastungskammern 100 und auch 120, welcher in der ersten Entlastungskammer 100 stärker ausfällt als in der zweiten Entlastungskammer 120. Um diesen Druck wieder abzubauen, werden die erste Ableitung 160 und auch die zweite Ableitung 170 geöffnet. Dies ist durch einen zweiten und einen dritten Pfeil P2 bzw. P3 angedeutet. Grundsätzlich ist es auch möglich, nur eine Entlastungskammer zu verwenden.

Die Funktionsweise der bisher beschriebenen Komponenten wird weiter unten noch näher erläutert.

Sobald schließlich die Bearbeitungselektrode der jeweiligen Anwendung entsprechend weit genug vorgeschoben ist, wird die Zufuhr des Fluids gestoppt. Zuvor, zugleich oder danach wird die Klemmvorrichtung 140 geschlossen, um die Bearbeitungselektrode in der erreichten Position zu halten.

Die Klemmvorrichtung 140 besteht beispielsweise aus einem aufvulkanisiertem Gummiring, welcher von einer Erste Druckkammer 190 umgeben ist. In diese Erste Druckkammer 190 wird zum Schließen der Klemmvorrichtung 140 ein Fluid wie etwa Luft eingeleitet (dies ist durch einen vierten Pfeil P4 angedeutet). Hierdurch verformt sich der aufvulkanisierte Gummiring, so daß die Bearbeitungselektrode 10 festgeklemmt wird.

Hinter der Hauptdüse 20 ist eine Schneidevorrichtung 200 angeordnet. Die Schneidevorrichtung 200 umfaßt eine ringförmige Schneide 210, welche konzentrisch zur Hauptachse H fest angeordnet ist, und eine Schneide 220, welche relativ zur ringförmigen Schneide 210 und senkrecht zur Hauptachse H beweglich ist. Die Schneide 220 wird beispielsweise mittels.eines doppelt wirkenden Kolbens durch Druckzufuhr bzw. Druckabfuhr (angedeutet durch einen fünften Pfeil P5) durch eine dritte Zu- bzw. Ableitung 230 hydraulisch hin- und herbewegt. Denkbar sind aber auch mechanische Antriebsmittel oder Kombinationen aus einem Kolben und einer Feder etc. Wenn die Bearbeitungselektrode 10 durch die ringförmige Schneide 210 hindurchgeführt ist und dann die Schneide 220 nach unten auf die Hauptachse H zu bewegt wird, wird die Bearbeitungselektrode 10 am Schneidepunkt 240 geschnitten.

Die Schneidevorrichtung 200 umfaßt außerdem eine Tellerfeder 250. Die Tellerfeder 250 drückt eine Halteplatte 260, in welcher die ringförmige Schneide 210 gelagert ist, und an welcher die Schneide 220 entlanggleitet, gegen die Schneide 220. Hierdurch wird verhindert, daß zwischen der ringförmigen Schneide 210 und der prismenförmigen Schneide 220 ein Spalt auftritt. Dies ist wichtig, da andernfalls die Gefahr besteht, daß die Schnittstelle unsauber wird oder die Bearbeitungselektrode geknickt statt geschnitten wird. Grundsätzlich kann dies auch durch eine sehr genaue Führung der prismenförmigen Schneide 220 gewährleistet werden. Kostengünstiger ist jedoch die Variante mit der Tellerfeder 250.

Alternativ zu der beschriebenen mechanischen Schneidevorrichtung kann an dieser Stelle auch jede andere Schneidevorrichtung eingesetzt werden. Denkbar wären insbesondere Vorrichtungen zur Elektrödentrennung durch Strecken, Strecken und Erwärmen und/oder Schmelzen der Elektrode.

Die Schneidevorrichtung 200 wird benötigt, um die Bearbeitungselektrode 10 nach seiner Aufbereitung in der erfindungsgemäßen Vorrichtung V zu schneiden. Da die Bearbeitungselektrode 10 im allgemeinen von einer endlichen Rolle zugeführt wird, wird die Schneidevorrichtung 200 außerdem benötigt, um die Bearbeitungselektrode am Ende des Abwickelvorgangs von einem auf der Rolle oder jedenfalls außerhalb des Elektrodenlaufsystems verbleibenden Teilstück zu trennen.

Im Mittelbereich der Tellerfeder und dahinter befindet sich eine Anschlußöffnung 270. In diese Anschlußöffnung 270 kann ein rohrförmiges Verbindungselement 280 eingeführt werden, welches mit einem Eingangselement 300 einer weiteren Elektrodenführung beweglich verbunden ist. Auf diese Weise ist es möglich, die bisher beschriebene Vorrichtung V mit einer weitergehenden Elektrodenführung zu verbinden. Alternativ ist es auch möglich, das rohrförmige Verbindungselement als Teil der erfindungsgemäßen Vorrichtung V auszubilden und im Bereich der weiteren Elektrodenführung eine Anschlußöffnung vorzusehen.

Das rohrförmige Verbindungselement 280 ist in einer zweiten Druckkammer 310 in der weiteren Elektrodenführung längs zur Hauptachse H und relativ zur zweiten Druckkammer 310 beweglich gelagert. Die zweite Druckkammer 310 ist konzentrisch zur Hauptachse H angeordnet. An dem rohrförmigen Verbindungselement 280 ist ein Kolben 320 ausgebildet, welcher mit der Wand der zweiten Druckkammer 310 abschließt und diese damit in zwei Teilbereiche unterteilt. Eine vierte Zuleitung 290 ist hinter dem Kolben 320 angeordnet und mündet somit in den hinteren Teilbereich. Eine fünfte Zuleitung 330 ist vor dem Kolben 320 angeordnet und mündet somit in den vorderen Teilbereich.

Wenn ein Fluid durch die vierte Zuleitung 290 hinter dem Kolben 320 in den hinteren Teilbereich der zweiten Druckkammer 310 zugeführt wird, werden der Kolben 320 und das rohrförmige Verbindungselement 280 nach vorne bewegt und das rohrförmige Verbindungselement 280 in die Anschlußöffnung 270 eingeführt (angedeutet durch einen sechsten Pfeil P6). Wenn hingegen Fluid in die fünfte Zuleitung 330 vor dem Kolben 320 in den vorderen Teilbereich der zweiten Druckkammer 310 zugeführt wird, werden der Kolben 320 und das rohrförmige Verbindungselement 280 nach hinten bewegt und die Verbindung wieder aufgehoben (angedeutet durch einen siebten Pfeil P7).

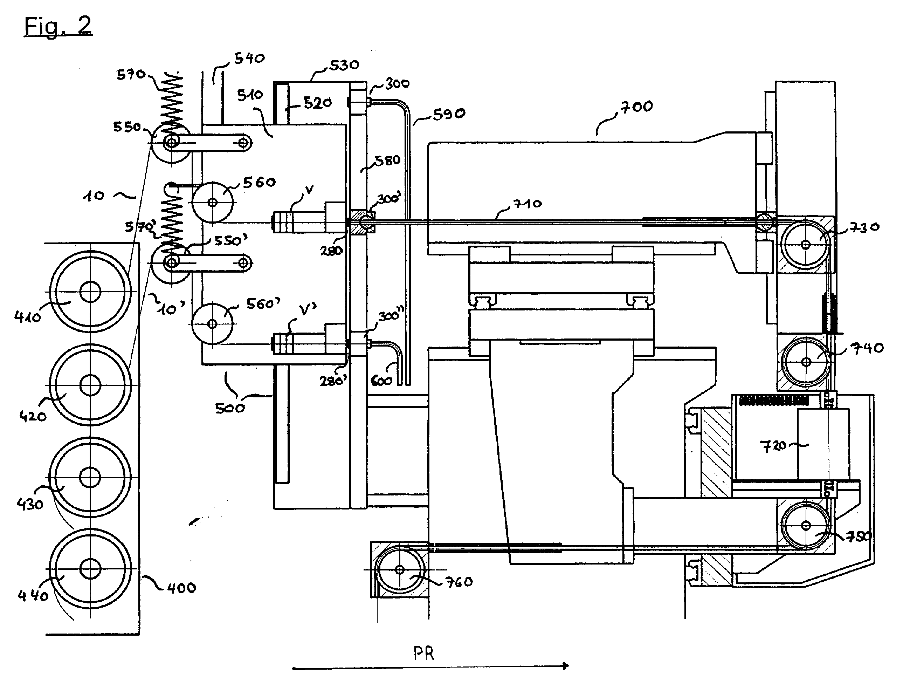

Fig. 2 zeigt einen Schnitt durch eine schematische Darstellung einer Funkenerosionsmaschine, in welcher die erfindungsgemäße Vorrichtung aus Fig. 1 zweifach implementiert ist. Im einzelnen sind in Fig. 2 ein Vorratsbehälter für Elektrodenspulen 400, eine Elektrodenaufbereitungs- und Elektrodenwechseleinheit 500 und die eigentliche Funkenerosionsmaschine 700 angeordnet.

Der Vorratsbehälter für Elektrodenspulen 400 umfaßt im Beispiel vier Elektrodenspulen 410, 420, 430 und 440. Dabei kann es sich um Spulen mit Elektroden gleicher Stärke handeln. Es kann gleichwohl eine Bearbeitungselektrode mit völlig anderen Eigenschaften (verschiedene Werkstoffe oder Qualitäten) eingesetzt werden. Statt Elektrodenspulen können schließlich auch Stabelektroden bereitgehalten werden.

Die erste Bearbeitungselektrode 10 von der ersten Spule 410 und die zweite Bearbeitungselektrode 10' von der zweiten Spule 420 sind teilweise abgewickelt und in Komponenten der Elektrodenaufbereitungs- und Elektrodenwechseleinheit 500 eingefädelt. Die dritte und vierte Elektrodenspule 430, 440 stehen als Vorrat zur Verfügung.

Die Elektrodenaufbereitungs- und Elektrodenwechseleinheit 500 umfaßt zwei erfindungsgemäße Vorrichtungen V und V'. Die erfindungsgemäßen Vorrichtungen V und V' sind mit horizontal verlaufenden Hauptachsen (nicht eingezeichnet) an einem Verschiebeelement 510 angeordnet, welches relativ zur eigentlichen Funkenerosionsmaschine 700 und senkrecht zu den horizontal verlaufenden Hauptachsen verschiebbar ist. Zu diesem Zweck ist das Verschiebeelement 510 an einer vertikal verlaufenden Schiene 520 bewegbar angeordnet, welche ihrerseits an einem Rahmen 530 befestigt ist. Die Positionierung des Verschiebeelements 510 wird mit nicht dargestellten Antriebsmitteln über ein Antriebselement 540 vorgenommen.

Vor den erfindungsgemäßen Vorrichtungen V und V' sind jeweils zwei Rollen 550 und 560 bzw. 550' und 560' angeordnet, von denen die erste jeweils an einem Federelement 570 bzw. 570' aufgehängt ist. Die erste Bearbeitungselektrode 10 ist gegenläufig um das erste Rollenpaar 550 und 560 geführt (d.h. erst um die erste Rolle 550 im Uhrzeigersinn und dann um die zweite Rolle 560 entgegen dem Uhrzeigersinn). Die zweite Bearbeitungselektrode 10' ist gegenläufig um das zweite Rollenpaar 550' und 560' geführt. Von dort aus ist die erste Bearbeitungselektrode 10 in die erste erfindungsgemäße Vorrichtung V und die zweite Bearbeitungselektrode 10' in die zweite erfindungsgemäße Vorrichtung V' eingefädelt.

Hinter dem Verschiebeelement 510 sind in einer parallel zur Schiene 520 verlaufenden und mit dem Rahmen 530 fest verbundenen Halterung 580 drei Eingangselemente 300, 300' und 300'' von drei Elektrodenführungen vertikal übereinander angeordnet. Das mittlere Eingangselement 300' ist Eingangselement die Elektrodenführung 710 der eigentlichen Funkenerosionsmaschine 700. Das obere Eingangselement 300 und das untere Eingangselement 300'' sind hingegen nur mit relativ Elektrodenentsorgungsleitungen 590 und 600 verbunden, welche der Abfuhr des Fluids aus der ersten Zuleitung 70 bzw. 70' der erfindungsgemäßen Vorrichtungen V bzw. V' und von Elektrodenresten dienen.

In Fig. 2 ist das Verschiebeelement 510 in einer ersten Position dargestellt, in welcher die erste erfindungsgemäße Vorrichtung V mit dem mittleren Eingangselement 300' der Elektrodenführung 710 der eigentlichen Funkenerosionsmaschine 700 über ein erstes rohrförmiges Verbindungselement 280 verbunden ist. Zugleich ist die zweite erfindungsgemäße Vorrichtung V' über ein zweites rohrförmiges Verbindungselement 280' mit dem unteren Eingangselement 300'' der unteren Elektrodenentsorgungsleitung 600 verbunden.

Das Verschiebeelement 510 kann über das Antriebselement 540 längs der Schiene 520 vertikal in eine zweite Position verschoben werden (nicht dargestellt). Hierzu müssen gegebenenfalls noch durch die erfindungsgemäßen Vorrichtungen V und V' und die entsprechenden Eingangselemente der ersten Position des Verschiebeelementes 510 verlaufende Drähte 10 bzw. 10' mittels der Schneidevorrichtungen 200 bzw. 200' durchtrennt werden. Davor, gleichzeitig oder danach können die rohrförmigen Verbindungselemente 280 bzw. 280' geöffnet werden. Sobald dies geschehen ist, kann dann das Verschiebeelement 510 längs der Schiene 520 verschoben werden. Die Verschiebung erfolgt derart, daß die erste erfindungsgemäße Vorrichtung V vor dem oberen Eingangselement 300 der ersten Elektrodenentsorgungsleitung 590 und die zweite erfindungsgemäße Vorrichtung V' vor dem mittleren Eingangselement 300' die Elektrodenführung 710 der eigentlichen Funkenerosionsmaschine 700 positioniert sind. Im Anschluß werden die erfindungsgemäßen Vorrichtungen V bzw. V' mit dem jeweils gegenüberliegenden Eingangselement 300 bzw. 300' verbunden. Zwischen beiden Positionen des Verschiebeelementes 510 kann beliebig oft hin- und hergewechselt werden.

In der dargestellten ersten Position des Verschiebeelementes 510 ist die erste Bearbeitungselektrode 10 von der ersten Rolle 410 durch die erste erfindungsgemäße Vorrichtung V und das mittlere Eingangselement 300' in die Elektrodenführung 710 der eigentlichen Funkenerosionsmaschine eingefädelt. Von dort ist es durch die eigentliche Funkenerosionsmaschine 700 (wie weiter unten im einzelnen beschrieben) hindurchgeführt. Infolgedessen erfolgt die Bearbeitung eines Werkstückes 720 mit der ersten Bearbeitungselektrode 10.

Die zweite Bearbeitungselektrode 10' ist bereits aufbereitet, d.h. in die zweite erfindungsgemäße Vorrichtung V' wie oben beschrieben eingefädelt. Während des Einfädelvorgangs wird das durch die erste Zuleitung 70' zugeführte Fluid über das zweite rohrförmige Verbindungselement 280', das untere Eingangselement 300'' und die untere Elektrodenentsorgungsleitung 600 abgeleitet. Um sicherzustellen, daß mit Abschluß des Einfädelvorgangs die Bearbeitungselektrode 10' (bzw. 10) bei der Anschlußöffnung 270' (bzw. 270) endet, wird die Bearbeitungselektrode 10' zunächst zu weit eingefädelt und dann, wenn er bereits in der unteren Elektrodenentsorgungsleitung 600 zu sehen ist bzw. aus dieser heraustritt mit der Schneidevorrichtung 200' am Schneidepunkt 240 geschnitten. Das abgetrennte Elektrodenende wird mit dem Fluid aus der ersten Zuleitung 70 über die untere Elektrodenentsorgungsleitung 600 entsorgt. Denkbar ist auch eine zusätzlich oder alternative Verwendung von Elektrodensensoren (nicht dargestellt).

Auf diese Weise kann ein Elektrodenwechsel mit geringem Zeitverlust durchgeführt werden. Auch kann die eigentliche Funkenerosionsmaschine 700 relativ lange in Abwesenheit eines Operators betrieben werden.

In der dargestellten ersten Position des Verschiebeelementes 510 wird die erste Bearbeitungselektrode 10 durch das mittlere Eingangselement 300', die Elektrodenführung der eigentlichen Funkenerosionsmaschine 710, eine erste Umlenkrolle 730, eine zweite Umlenk- und Bremsrolle 740, durch das Werkstück 720, um eine dritte Umlenkrolle 750 und um eine Abzugsrolle 760 geführt. Dabei wird die Bearbeitungselektrode 10 beim Einfädeln in die rohrförmig ausgebildete Elektrodenführung 710 der eigentlichen Funkenerosionsmaschine 700 bis hin zum Werkstück 720 durch das Fluid aus der ersten Zuleitung 70 der ersten erfindungsgemäßen Vorrichtung V transportiert. Hierbei ist es zweckmäßig, das dem Werkstück zugewandte Ende der rohrförmigen Elektrodenführung 710 mit einer weit ausgebildeten Öffnung zu versehen, um einen Rückstau zu vermeiden. Da andererseits während des Betriebes der eigentlichen Funkenerosionsmaschine 700 nach dem Einfädelvorgang regelmäßig an dieser Stelle eine kleine Öffnung zur Erzeugung eines Jetstrahls benötigt wird, kann dies durch ein Bypass-Ventil erreicht werden.

Zusammenfassend sind insbesondere die folgenden Betriebsweisen einer z.B. gemäß Fig.2 ausgestalteten Funkenerosionsmaschine vorteilhaft:
- Zur Bereitstellung wird die Bearbeitungselektrode 10 oder 10' angesaugt, festgeklemmt und geschnitten. Für das Ansaugen wird die erfindungsgemäße Vorrichtung V mit einer der Elektrodenentsorgungsleitungen 590 oder 600 verbunden und hierdurch in eine Bereitstellungsposition gebracht. Die erste und zweite Ableitung 160 bzw. 170 werden geschlossen, die Klemmvorrichtung 140 wird geöffnet und die Schneide 220 wird ebenfalls geöffnet. Das rohrförmige Verbindungselement 280 wird durch Druckzufuhr auf die vierte Zuleitung 290 angeschlossen. Danach wird Fluid über die erste Zuleitung 70 zugeführt. Insbesondere in der Bereitstellungsposition herrscht geringer Gegendruck am Ausgang, da es sich bei den Elektrodenentsorgungsleitungen 590 und 600 um relativ kurze Rohrstücke handelt (in einer anderen Position muß gegebenenfalls geringer Gegendruck auf andere Weise gewährleistet werden. Infolgedessen kann eine besonders hohe Strömungsgeschwindigkeit am Ausgangsbereich A der Hauptdüse 20 erreicht werden. Dies wiederum hat zur Folge, daß eine besonders starke Saugwirkung am Eingang der vierten Düse 150 entsteht.
- Zum automatischen Elektrodenwechsel wird zunächst die alte Bearbeitungselektrode 10 bzw. 10' abgetrennt. Das rohrförmige Verbindungselement 280 bzw. 280' wird durch Druckzufuhr auf die fünfte Zuleitung 330 zurückgefahren. Das ganze Verschiebeelement 510 mit den Elektrodenaufbereitungseinheiten V und V' wird so verschoben, daß die neue Bearbeitungselektrode 10 bzw. 10' in die Elektrodenzuführungsleitung710 kommt. Die erste und zweite Ableitung 160 bzw. 170 werden geöffnet, die Klemmvorrichtung 140 wird geöffnet und die Schneide 220 wird ebenfalls geöffnet. Das Verbindungselement 280 bzw. 280' wird nun in Ladeposition durch Druckzufuhr auf die vierte Zuleitung 290 wieder verbunden. Danach wird wiederum Fluid über die erste Zuleitung 70 zugeführt. Im Bereich des Arbeitskopfes (oberhalb vom Werkstück 720) ist ein Entlastungsventil vorhanden (nicht dargestellt), welches beim automatischen Elektrodenwechsel geöffnet ist, um einen zu großen Druckabfall an der Einfädeldüse zu vermeiden. Auf diese Weise kann der erforderliche Volumenstrom für den Vorschub der Bearbeitungselektrode durch den Zufuhrteil der eigentlichen Funkenerosionsmaschine erzeugt werden.
- Das automatische Einfädeln der Bearbeitungselektrode 10 bzw. 10' in der Arbeitszone im Bereich des Werkstücks 720 erfolgt analog dem Einfädelvorgang beim automatischen Elektrodenwechsel. Für diesen Bereich ist aber das Entlastungsventil am Arbeitskopf geschlossen, um den vollen Druck für den Einfädeljetstrahl zu erzeugen.

Die oben beschriebene Funkenerosionsmaschine kann in unterschiedlicher Weise benutzt werden. Zum einen ist es möglich, einen Elektrodenwechsel nach Verbrauch einer ersten Elektrodenrolle automatisch durchzuführen. Zum anderen kann die Elektrodenwechsel stattfinden, um ein (oder mehrere) Werkstücke nacheinander automatisch mit unterschiedlichen Elektrodenarten zu bearbeiten. Ferner besteht die Möglichkeit, diese Betriebsmöglichkeiten durch eine größere Anzahl erfindungsgemäßer Vorrichtungen zu erweitern.

## Patentansprüche

1. Vorrichtung zum Einführen einer Bearbeitungselektrode, insbesondere einer Drahtelektrode (10,10') oder einer Stabsenkelektrode, in ein Elektrodenlaufsystem (590,600,710) einer Funkenerosionsmaschine, mit:
a) wenigstens einem Ansaug- und Vorschubmittel (20, 30,40,70) zum Ansaugen und Vorschieben der Bearbeitungselektrode (10,10'); und
b) wenigstens einem in Elektrodenvorschubrichtung vor dem Ansaug- und Vorschubmittel (20, 30, 40, 70) vorgesehenen Druckausgleichsmittel (100, 120; 160, 170) zum Abbau eines Fluiddruckes.

2. Vorrichtung nach Anspruch 1, bei welcher
a) die Ansaug- und Vorschubmittel (20,30,40,70) eine Hauptdüse (20) umfassen, welche im wesentlichen längs einer Hauptachse (H) ausgerichtet ist;
b) ein Fluid in die Hauptdüse (20) einspritzbar ist;
c) durch Einspritzung des Fluids in die Hauptdüse (20) auf der Einspritzseite (E) zunächst ein die Bearbeitungselektrode (10,10') ansaugender Unterdruck erzeugbar und dann die angesaugte Bearbeitungselektrode (10,10') vorschiebbar ist.

3. Vorrichtung nach Anspruch 2, bei welcher
a) die Hauptdüse als Außendüse (20) mit einer Innendüse (30) und einem zwischen Außen- und Innendüse verlaufenden sich verjüngenden Strömungsspalt (40) ausgebildet ist;
b) das Fluid in den Strömungsspalt (40) zwischen der Innenwand der Hauptdüse (20) und der Außenwand der Innendüse (30) einspritzbar ist; und
d) die Bearbeitungselektrode (10,10') durch die Bohrung (80) der Innendüse (30) zunächst ansaugbar und dann vorschiebbar ist.

4. Vorrichtung nach einem der vorstehenden Ansprüche, bei welcher der von der Hauptdüse (20) abgewandte Eingang der Bohrung (80) als erste Saugdüse (90) ausgebildet ist.

5. Vorrichtung nach einem der vorstehenden Ansprüche, bei welcher
a) im wesentlichen längs der Hauptachse (H) vor dem von der Hauptdüse (20) abgewandten Eingang der Bohrung (80) als Druckausgleichsmittel (100,120,160,170) wenigstens eine Entlastungskammer (100,120) angeordnet ist; und
b) aus der Entlastungskammer (100,120) durch eine Ableitung (160,170) Fluid abführbar ist.

6. Vorrichtung nach einem der vorstehenden Ansprüche, welche zwei Entlastungsklammern (100,120) umfaßt.

7. Vorrichtung nach einem der vorstehenden Ansprüche, bei welcher Fluid aus den Entlastungskammern (100,120) durch die Ableitungen (160,170) im wesentlichen entgegen der Schwerkraft abführbar ist.

8. Vorrichtung nach einem der vorstehenden Ansprüche, welche wenigstens ein Haltemittel (140) zum Halten der angesaugten Bearbeitungselektrode (10,10') aufweist.

9. Vorrichtung nach einem der vorstehenden Ansprüche, bei welcher die Haltemittel (140) im wesentlichen längs der Hauptachse (H) vor den Entlastungskammern (100,120) angeordnet sind.

10. Vorrichtung nach einem der vorstehenden Ansprüche, bei welcher
a) die Haltemittel (140) als Ring aus einem elastisch verformbaren Material ausgebildet sind; und
b) die Bearbeitungselektrode (10,10') durch den Ring (140) hindurchführbar ist.

11. Vorrichtung nach einem der vorstehenden Ansprüche, bei welcher die Haltemittel (140) aus aufvulkanisiertem Gummi ausgebildet sind.

12. Vorrichtung nach einem der vorstehenden Ansprüche, bei welcher
a) die Haltemittel (140) in einen geöffneten und geschlossenen Zustand versetzbar sind; und
b) der geschlossene Zustand durch Zusammendrücken des elastisch verformbaren Haltemittels (140) erreichbar ist; und
c) das elastisch verformbare Haltemittel (140) durch Zufuhr eines Fluids zusammendrückbar ist.

13. Vorrichtung nach einem der vorstehenden Ansprüche, bei welcher im wesentlichen längs der Hauptachse (H) vor den Haltemitteln (140) eine dritte Saugdüse (150) ausgebildet ist.

14. Vorrichtung nach einem der vorstehenden Ansprüche, bei welcher im wesentlichen längs der Hauptachse (H) hinter der Hauptdüse (20) Trennmittel (200) zum Schneiden der Bearbeitungselektrode (10,10') angeordnet sind.

15. Vorrichtung nach einem der vorstehenden Ansprüche, bei welcher die Trennmittel (200) mechanische Schneidemittel (210,220) umfassen.

16. Vorrichtung nach einem der vorstehenden Ansprüche, bei welcher ein Schneidemittel (220) durch Zu- bzw. Abfuhr eines Fluids bewegbar ist.

17. Vorrichtung nach einem der vorstehenden Ansprüche, bei welcher die Trennmittel (200) Wärme- und/oder Streckmittel umfassen.

18. Vorrichtung nach einem der vorstehenden Ansprüche, bei welcher
a) im wesentlichen längs der Hauptachse (H) hinter den Trennmitteln (200) Federmittel (250) angeordnet sind; und
b) die Federmittel (250) eine Halteplatte (260), in welcher ein Schneidelement (210) fest angeordnet ist, gegen ein weiters Schneidelement (220) drücken, welches relativ zum ersten Schneidelement (210) und längs der Halteplatte (260) bewegbar ist.

19. Vorrichtung nach einem der vorstehenden Ansprüche, bei welcher die Federmittel (250) als Tellerfeder ausgebildet sind.

20. Vorrichtung nach einem der vorstehenden Ansprüche, welche relativ zu einem Elektrodenlaufsystem (590, 600,710) bewegbar ist.

21. Vorrichtung nach einem der vorstehenden Ansprüche, bei welcher im wesentlichen längs der Hauptachse im Mittelbereich der Federmittel (250) eine Anschlußöffnung (270) für ein Eingangsteil (300) des Elektrodenlaufsystems ausgebildet ist.

22. Vorrichtung nach Anspruch 21, bei welcher ein rohrförmiges, mit dem Eingangsteil (300) verbundenes Verbindungselement (280,280') im wesentlichen längs der Hauptachse (H) in die Anschlußöffnung (270) einführbar ist.

23. Vorrichtung nach Anspruch 22, bei welcher das Verbindungselement (280,280') mit dem Eingangsteil (300) beweglich verbunden ist.

24. Vorrichtung nach einem der vorstehenden Ansprüche, bei welcher das Verbindungselement (280,280') relativ zum Elektrodenlaufsystem (590,600,710) durch Zufuhr eines Fluids bewegbar ist.

25. Vorrichtung nach einem der vorstehenden Ansprüche, bei welcher das in die Hauptdüse (20) eingespritzte Fluid zum Vorschub der Bearbeitungselektrode (10,10') in dem Elektrodenlaufsystem (590,600,710) verwendbar ist, wenn die Aufbereitungsvorrichtung (V,V') und das Elektrodenlaufsystem (590,600,710) über das Verbindungselement (280,280') verbunden sind.

26. Elektrodenwechselvorrichtung, welche
a) wenigstens zwei Vorrichtungen (V,V') zum Einführen einer Bearbeitungselektrode (10,10') nach einem der Ansprüche 1-25 umfaßt; und
b) zum wahlweisen Zuführen der jeweiligen Bearbeitungselektrode (10,10') relativ zu einem Eingangselement (300,300',300'') des Elektrodenlaufsystems (590,600,710) bewegbar ist.

27. Verfahren zum Einführen einer Bearbeitungselektrode, insbesondere einer Drahtelektrode (10,10') oder einer Stabsenkelektrode, in ein Elektrodenlaufsystem (590,600,710) einer Funkenerosionsmaschine, bei welchem:
a) ein Fluid zwischen eine als Außendüse ausgebildete Hauptdüse (20) und eine Innendüse (30) eingespritzt wird;
b) hierdurch ein Unterdruck in einer Bohrung (80) der Innendüse (30) erzeugt und eine Bearbeitungselektrode (10,10') angesaugt wird, und die angesaugte Bearbeitungselektrode (10,10') vorgeschoben wird; und
c) dabei der Fluiddruck in wenigstens einem der Hauptdüse (20) vorgeschalteten Druckausgleichsmittel (100, 120; 160, 170) abgebaut wird.
